# EUROPÄISCHE PATENTSCHRIFT

(11) **EP 2 298 583 B1**
(45) Veröffentlichungstag und Bekanntmachung des Hinweises auf die Patenterteilung: **24.08.2016**
(21) Anmeldenummer: 10009202.2
(22) Anmeldetag: 04.09.2010
(51) Int. Cl.: B60J 7/12, B60J 7/185

(54) **Faltverdeck für einen Personenkraftwagen**
Collapsible roof for a passenger vehicle
Toit escamotable pour un véhicule de transport de passagers

(30) Priorität: 18.09.2009 DE 102009042236
(43) Veröffentlichungstag der Anmeldung: 23.03.2011
(73) Patentinhaber: AUDI AG, 85045 Ingolstadt (DE)
(72) Erfinder: Rosok, Urs, 70806 Kornwestheim (DE); Mangold, Artur, 72172 Sulz (DE); Vogt, Dirk, 70619 Stuttgart (DE)
(74) Vertreter: Engelhardt, Harald

(56) Entgegenhaltungen:
- EP-A2- 0 930 187
- WO-A2-2004/056596
- DE-A1-102007 011 918
- DE-C1- 4 128 542
- DE-C1- 19 956 875
- DE-U1- 20 117 926
- US-A- 1 333 798

## Beschreibung

Die Erfindung bezieht sich auf ein Faltverdeck für einen Personenkraftwagen, nach dem Oberbegriff des Patentanspruchs 1.

Es ist ein Personenkraftwagen bekannt, US 1,333,798, der ein Faltverdeck mit einem Verdeckbezug aufweist. Der Verdeckbezug überspannt einen Fahrgastraum des Personenkraftwagens und wird von einem schwenkbare Stützen und Lenker aufweisenden Gestänge getragen. In der Schließstellung des Faltverdecks verlaufen ein mittlerer Lenker und eine vordere Dachstütze in etwa horizontal zueinander. Um Dachstütze und Lenker lagemäßig gezielt auszurichten sind erste und zweite Zentrierungsvorrichtungen vorgesehen, die am Lenker befestigt sind. Jede Zentriervorrichtung weist ein über eine Schraube mit dem Lenker verbundenes Tragglied auf Eine freie Seite des Tragglieds umfasst einen U-förmigen Zentrierabschnitt, der unter Formschluss mit der Dachstütze zusammenwirkt.

In der DE 15 55 105 wird eine Sicherung für ein Gestänge eines Klappverdecks behandelt, das einen Hauptspriegel, einen Rückwandspriegel und einen Vorderwandspriegel besitzt, der je Fahrzeuglängsseite mit einem Längsholm verbunden ist. Der Längsholm ist in zwei Gestängeteile unterteilt, die sich in einem definierten Bereich überlappen. In diesem Bereich befindet sich diese Sicherung, die besagte Gestängeteile gezielt zueinander zentriert.

Dokument DE 19956875 wird als nächstliegender Stand der Technick angesehen. Es offenbart der Oberbegriff des Anspruchs 1.

Es ist Aufgabe der Erfindung, an Längsseiten eines Dachbereichs verlaufende Dachseitenlenker unter Vermittlung von Fixierungseinrichtungen funktionsgerecht zueinander auszurichten. Dabei sollte aber auch sichergestellt sein, dass die Fixierungseinrichtungen sich mit geringem Raumanspruch in die Dachseitenlenker integrieren lassen.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass jede der Fixierungseinrichtungen zwischen den einander zugekehrten Dachlenkern des Faltverdecks sich einerseits durch räumlich günstige Verhältnisse und andererseits durch gute Funktion auszeichnet. Letztere wird durch eine konstruktiv leicht umsetzbare Bauweise der Einformung in dem an sich vorhandenen Vollkörper des ersten vorderen Dachlenkers und des aufwandsarm verwirklichbaren Eingriffselements des zweiten hinteren Dachlenkers unterstützt. Hierzu arbeiten die Einformung und das Eingriffselement über ohne weiteres umsetzbare, konisch verlaufende erste und zweite Stützflächen zusammen, die sich von oben nach unten erweitern. Das Eingriffselement wird durch eine einfache Verlängerung des zweiten hinteren Dachlenkers gebildet, die sich musterhaft mit letzterem Lenker vereinen lässt. Damit Eingriffselement und Einformung leicht in ihre Endpositionen verbringbar sind, sind zumindest die zweiten Stützflächen des Eingriffselements mit einer Oberflächenbeschichtung versehen, die definierte Gleit- und Geräuschreduktionseigenschaften aufweist. Diese Oberflächenbeschichtung zeichnet sich dadurch aus, dass sie Bestandteil eines aufwandsarm herstellbaren Hüllkörpers ist, der einen Kernträger des zweiten hinteren Dachlenkers umgibt. Schließlich ist hervorzuheben, dass der Hüllkörper nach Art eines Schuhs ausgeführt ist, der über den Kernträger geschoben wird.

In der Zeichnung wird ein Ausführungsbeispiel der Erfindung gezeigt, das nachstehend näher beschrieben ist.

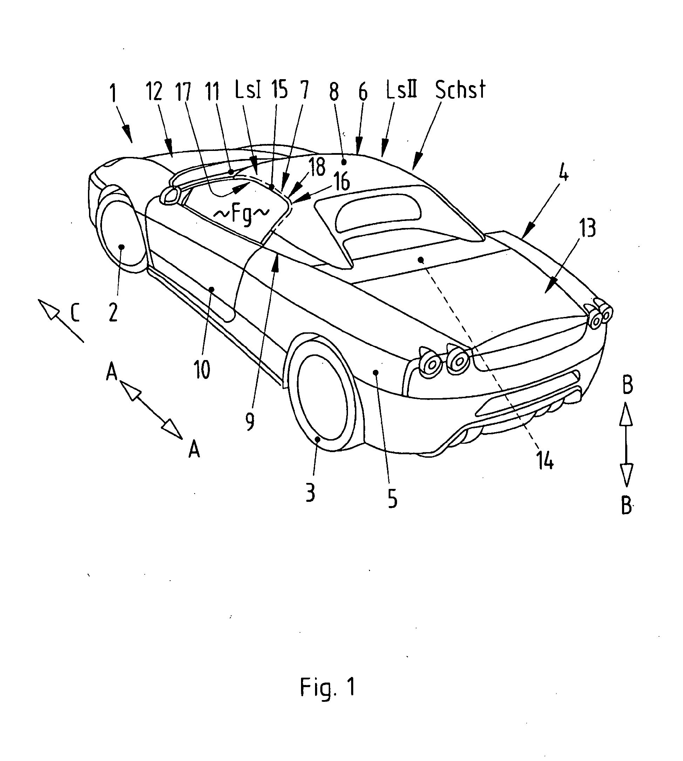

Es zeigen
Fig. 1 eine Schrägansicht von hinten links oben auf einen Personenkraftwagen mit einem Faltverdeck,
Fig. 2 eine Schrägansicht von vorne links oben auf ein Verdeckgestänge des Faltverdecks in Schließstellung nach Fig. 1,
Fig.3 eine Teilansicht der Fig.1 in größerem Maßstab mit dem Faltverdeck in einer Zwischenstellung,
Fig. 4 einen Schnitt nach der Linie IV-IV der Fig. 2 mit einer Fixierungseinrichtung in Einrückstellung in größerem Maßsatb,
Fig. 5 einen Schnitt entsprechend Fig. 4, jedoch die Fixierungseinrichtung in Zwischeneinrückstellung,
Fig. 6 einen Schnitt etwa nach der Linie VI-VI der Fig. 3 in größerem Maßstab.

Ein Personenkraftwagen 1 umfasst einen von Rädern 2 und 3 getragenen Aufbau 4, der einen Grundkörper 5 und ein Faltverdeck 6 mit Verdeckgestänge 7 und Verdeckbezug 8 aufweist. Etwa an einer Gürtellinie 9 stoßen das Faltverdeck 6 und der Grundkörper 5 zusammen, der Türen 10, einen Windschutzscheibenrahmen11, einen Bug 12 sowie ein Heck 13 besitzt. Das Faltverdeck 6 ist zwischen einer einen Fahrgastraum Fg überspannenden Schließstellung Schst und einer in einem Aufnahmeraum 14 im Heck 13 abgelegten Offenstellung -nicht gezeigt- bewegbar. Im Dachbereich 15 des Faltverdecks 6 ist das Verdeckgestänge 7 mit einem in Fahrzeuglängsrichtung A-A verlaufenden Lenkersystem 16 versehen, das an Längsseiten LsI und LsII einander zugekehrte erste vordere Dachlenker 17 und zweite hintere Dachlenker 18 umfasst, welche Dachlenker 17 und 18 relativbeweglich zueinander ausgebildet sind.

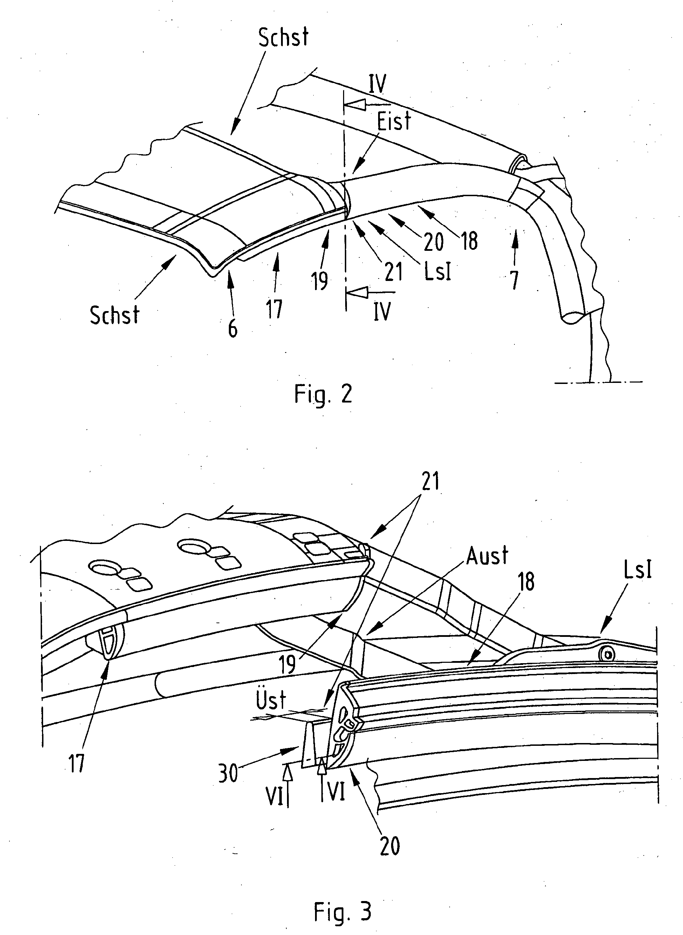

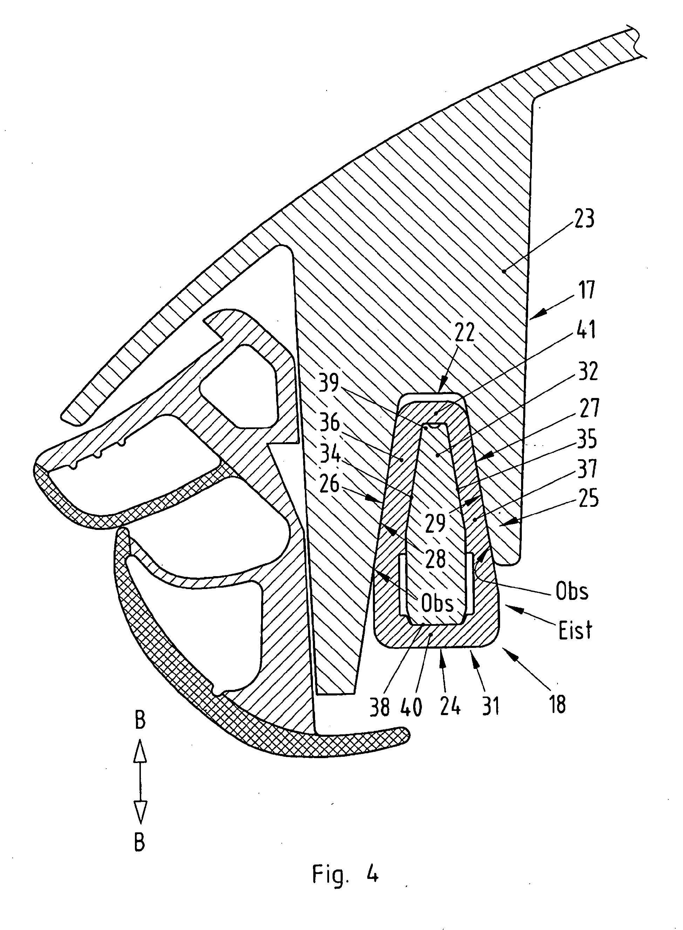

Jede Paarung der Dachlenker 17 und 18, die angenähert horizontal ausgerichtet sind, besitzt an einander zugekehrten Endbereichen 19 und 20 eine Fixierungseinrichtung 21, über die die Dachlenker 17 und 18 in der Schließstellung Schst des Faltverdecks 6 Lage dieser Lenker bestimmend zusammenarbeiten. Die Fixierungseinrichtung 21 umfasst zum einen eine nach Art einer Ausnehmung ausgeführte Einformung 22 in einem Vollkörper 23 des ersten vorderen Dachlenkers 17 und zum anderen ein korrespondierendes Eingriffselement 24 des zweiten hinteren Dachlenkers 18. Einformung 22 und Eingriffselement 24 sind von einer Einrückstellung Eist -Fig. 2 und 4- in eine Ausrückstellung Aust -Fig. 3- mittels definierter Bewegungen des Faltverdecks 6 verbringbar.

Die Einformung 22 weist einen trapezartigen Querschnitt 25 auf, der mit ersten nahezu aufrecht ausgerichteten und konisch verlaufenden Stützflächen 26 und 27 versehen ist. Das Eingriffselement 24 ist bezüglich des Querschnitts ähnlich ausgeführt wie der Querschnitt 25 der Einformung 22 und ist mit zweiten, ebenfalls konisch sich erstreckenden Stützflächen 28 und 29 ausgestattet. Die ersten Stützflächen 26 und 27 und die zweiten Stützflächen 28 und 29 wirken in der Eingriffsstellung Eist unter Ausübung von Formschluss zusammen. Und in Fahrzeughöhenrichtung B-B betrachtet erweitern sich die ersten Stützflächen 26 und 27 sowie die zweiten Stützflächen 28 und 29 von oben nach unten hin. Das Eingriffselement 24 bildet -in Fahrtrichtung C gesehen- eine Verlängerung 30 des zweiten hinteren Dachlenkers 18, der mit einem definierten Überstand Üst über den zweiten Endbereich 20 des besagten zweiten hinteren Dachlenkers 18 hinausragt.

Zwischen den ersten und den zweiten Stützflächen 26 und 27 sowie 28 und 29 ist eine Oberflächenbeschichtung Obs vorgesehen, die im Ausführungsbeispiel an den zweiten Stützflächen 28 und 29 des Eingriffselements 24 vorgesehen ist und über definierte Gleit- und Geräuschreduktionseigenschaften verfügt. In diesem Zusammenhang ist auch denkbar, diese Oberflächenbeschichtung Obs zusätzlich an den ersten Stützflächen 26 und 27 anzubringen.

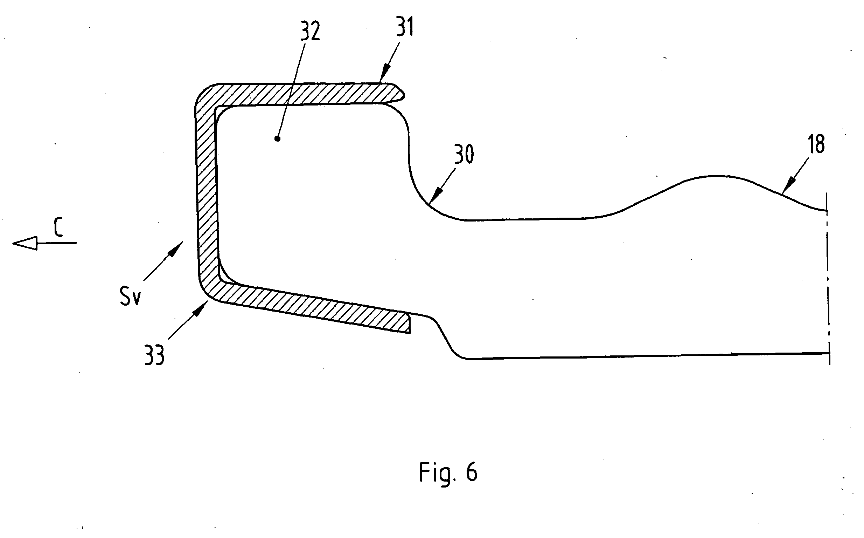

Die Oberflächenbeschichtung Obs wird von einem Hüllkörper 31 getragen bzw. ist integraler Bestandteil des zuletzt genannten, der aus Kunststoff, Metall oder dgl. besteht und einen Kernträger 32 der Verlängerung 30 des zweiten Dachlängsträgers 18 im Wesentlichen allseitig umgibt. Der Hüllkörper 31 ist nach Art eines Schuhs 33 ausgeführt, der von einer in Fahrtrichtung C vorne liegenden Seite Sv -Fig. 6- des Kernträgers 32 aus über den Kernträger 32 geschoben wird. Der Kernträger 32 besteht bspw. aus Metall und weist konische Flächen 34 und 35 auf, die sich parallel zu den zweiten Stützflächen 28 und 29 erstrecken, an welchen konischen Flächen 34 und 35 erste Wandabschnitte 36 und 37 des Hüllkörpers 31 anliegen. Der Hüllkörper 31 ist -in Fahrzeughöhenrichtung B-B betrachtet- mit einer unteren Begrenzung 38 und einer oberen Begrenzung 39 versehen, die in einer horizontalen Ebene flächig ausgebildet sind. An diese Begrenzungen 38 und 39 sind zweite Wandabschnitte 40 und 41 des Hüllkörpers 31 herangeführt.

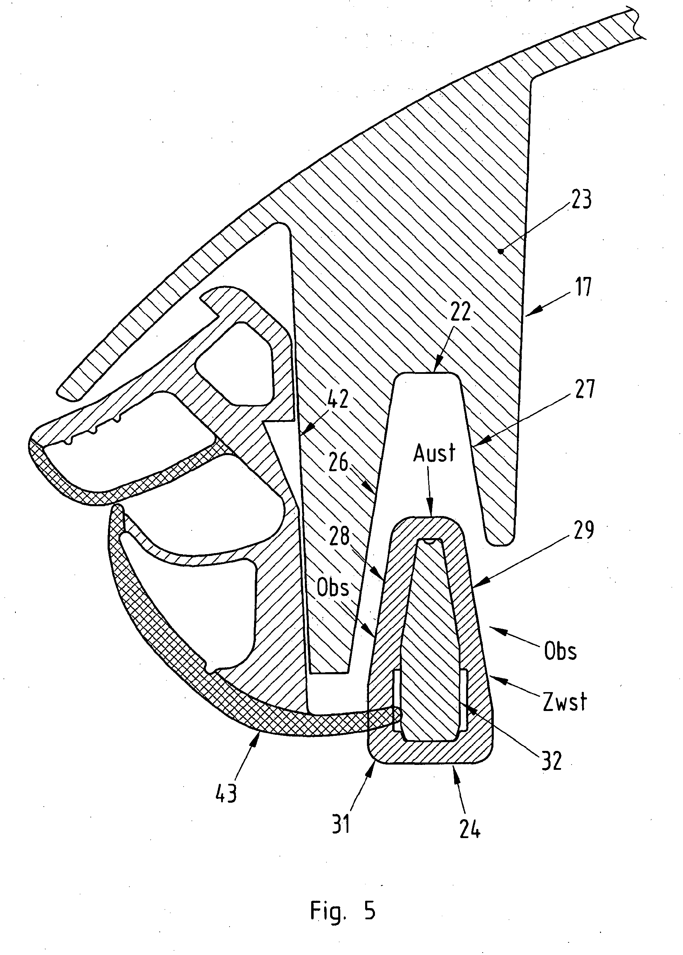

In Fig. 5 ist das Eingriffselement 24 relativ zur Einformung 22 in einer Zwischeneinrückstellung Zwst dargestellt, wogegen gemäß Fig.4 Eingriffselement 24 und Einformung 22 in die Einrückstellung Eist verbracht sind. In der Einrückstellung übt die Fixierungseinrichtung 21 ihre Lage bestimmende Funktion zwischen dem zweiten hinteren Dachlenker 18 und dem ersten vorderen Dachlenker 17 aus, welcher erste vordere Dachlenker 17 benachbart der Fixierungseinrichtung 21 mit einem aufrechten Halteabschnitt 42 einen Dichtkörper 43 trägt, der unter anderem mit einer Seitenscheibe der Tür 10 zusammenwirkt.

## Patentansprüche

1. Faltverdeck für einen Personenkraftwagen, das zwischen einer einen Fahrgastraum überspannenden Schließstellung in eine in einem Aufnahmeraum eines Aufbaus des Personenkraftwagens abgelegte Offenstellung verstellbar ist und an Längsseiten eines Dachbereichs mit einander zugekehrten Dachlenkern versehen ist, welcher Dachlenker in der Schließstellung des Faltverdecks über Formschluss bewirkende Fixierungseinrichtungen zusammenarbeiten, wobei jede Fixierungseinrichtung (21) eine in einen Vollkörper (23) eingearbeitete Einformung (22) eines ersten Dachlenkers (17) umfasst, in welche Einformung (22) ein korrespondierendes Eingriffselement eines zweiten Dachlenkers (18) eingreift, **dadurch gekennzeichnet, dass** die Einformung (22) und das Eingriffselement (24) über konisch verlaufende erste Stützflächen (26 und 27) der Einformung (22) und zweite Stützflächen (28 und 29) des Eingriffselements (24) zusammenwirken.

2. Faltverdeck nach Anspruch 1, **dadurch gekennzeichnet, dass** sich die ersten Stützflächen (26 und 27) und die zweiten Stützflächen (28 und 29) -in Fahrzeughöhenrichtung (B-B) betrachtet- von oben nach unten erweitern.

3. Faltverdeck nach Anspruch 1 oder 2, **dadurch gekennzeichnet, dass** das Eingriffselement (24) als Verlängerung (30) des zweiten hinteren Dachlenkers (18) ausgebildet ist.

4. Faltverdeck nach Anspruch 3, **dadurch gekennzeichnet, dass** -in Fahrzeuglängsrichtung (A-A) gesehen- die Verlängerung (30) des Eingriffselements (24) mit definiert geringem Überstand (Üst) über den zweiten Dachlenker (18) hinausragt.

5. Faltverdeck nach einem oder mehreren der vorangehenden Ansprüche, **dadurch gekennzeichnet, dass** zumindest das Eingriffselement (24) an den zweiten Stützflächen (28 und 29) mit einer Oberflächenbeschichtung (Obs) versehen ist.

6. Faltverdeck nach Anspruch 5, **dadurch gekennzeichnet, dass** die Oberflächenbeschichtung (Obs) mit definierten Gleit- und Geräuschreduktionseigenschaften versehen ist.

7. Faltverdeck nach einem der Ansprüche 5 oder 6, **dadurch gekennzeichnet, dass** die Oberflächenbeschichtung (Obs) an einem Hüllkörper (31) vorgesehen ist.

8. Faltverdeck nach Anspruch 7, **dadurch gekennzeichnet, dass** der Hüllkörper (31) einen Kernträger (32) der Verlängerung (30) des zweiten Dachlenkers (18) im Wesentlichen vollständig umgibt.

9. Faltverdeck nach Anspruch 8, **dadurch gekennzeichnet, dass** der Hüllkörper (31) nach Art eines Schuhs (33) ausgeführt ist, der von einer -in Fahrtrichtung C gesehen- vorne liegenden Seite (Sv) des Kernträgers (32) aus eingeführt wird.

10. Faltverdeck nach einem der Ansprüche 8 oder 9, **dadurch gekennzeichnet, dass** der Kernträger (32) konische Flächen (34 und 35) aufweist, an denen erste Wandabschnitte (36 und 37) des Hüllkörpers (31) anliegen.

11. Faltverdeck nach einem der Ansprüche 8 bis 10, **dadurch gekennzeichnet, dass** der Kernträger (32) -in Fahrzeughöhenrichtung (B-B) gesehen- eine untere Begrenzung (38) und eine obere Begrenzung (39) aufweist, an den zweite Wandabschnitte (40 und 41) des Hüllkörpers (31) anliegen.

12. Faltverdeck nach einem der Ansprüche 7 bis 11, **dadurch gekennzeichnet, dass** der Hüllkörper (31) des Eingriffselements (24) aus Kunststoff, Metall oder dgl. besteht.

## Claims

1. Folding roof for a passenger car adjustable between a closed position spanning the passenger compartment and an open position in which it is placed in a storage space in a structure of the passenger car and which on longitudinal sides of a roof area is provided with roof guides facing one another, which roof guides in the closed position of the folding roof interact by means of fixing units bringing about a form fit, wherein each fixing device (21) comprises a shaping (22) made in a solid body (23) of a first roof guide (17) in which shaping (22) a corresponding engaging element of a second roof guide (18) engages, **characterised in that** the shaping (22) and the engaging element (24) interact via conical first supporting surfaces (26 and 27) of the shaping (22) and second support surfaces (28 and 29) of the engaging element (24).

2. Folding roof according to claim 1, **characterised in that** the first supporting surfaces (26 and 27) and the second supporting surfaces (28 and 29) -viewed in the perpendicular direction of the vehicle (B-B) -extend from top to bottom.

3. Folding roof according to claim 1 or 2, **characterised in that** the engaging element (24) takes the form of an extension (30) to the second rear roof guide (18).

4. Folding roof according to claim 3, characterised in that-viewed in the longitudinal direction of the vehicle (A-A) -the extension (30) to the engaging element (24) extends with a defined slight protrusion (Üst) beyond the second roof guide (18).

5. Folding roof according to one or more of the preceding claims, **characterised in that** at least the engaging element (24) on the second supporting surfaces (28 and 29) is provided with a surface coating (Obs).

6. Folding roof according to claim 5, **characterised in that** the surface coating (Obs) is provided with defined slip and noise reduction properties.

7. Folding roof according to claim 5 or 6, **characterised in that** the surface coating (Obs) is provided on an enveloping body (31).

8. Folding roof according to claim 7, **characterised in that** the enveloping body (31) substantially completely surrounds a central beam (32) of the extension (30) to the second roof guide (18).

9. Folding roof according to claim 8, **characterised in that** the enveloping body (31) is designed like a shoe (33), which - viewed in the direction of travel C - is introduced from a forward position (Sv) of the central beam (32).

10. Folding roof according to claim 8 or 9, **characterised in that** the central beam (32) has conical surfaces (34 and 35), on which first wall sections (36 and 37) of the enveloping body (31) rest.

11. Folding roof according to any one of claims 8 to 10, **characterised in that** the central beam (32) - viewed in the perpendicular direction of the vehicle (B-B)-has a lower limitation (38) and an upper limitation (39), on which second wall sections (40 and 41) of the enveloping body (31) rest.

12. Folding roof according to any one of claims 7 to 11, **characterised in that** the enveloping body (31) of the engaging element (24) is made of plastic, metal or similar.

## Revendications

1. Capote pour voiture particulière qui est déplaçable entre une position fermée s'étendant au-dessus d'un habitacle et une position ouverte rangée dans un espace de logement d'une carrosserie de la voiture particulière et qui est munie de bielles de toit adjacentes les unes aux autres sur des côtés longitudinaux d'une zone de toit, lesquelles bielles de toit coopèrent, dans la position fermée de la capote, par l'intermédiaire de dispositifs de fixation créant une liaison par concordance de forme, chaque dispositif de fixation (21) comprenant une forme rentrante (22), pratiquée dans un corps plein (23), d'une première bielle de toit (17), forme rentrante (22) dans laquelle pénètre un élément de prise correspondant d'une deuxième bielle de toit (18), **caractérisée en ce que** la forme rentrante (22) et l'élément de prise (24) coopèrent par l'intermédiaire de premières surfaces d'appui (26 et 27), s'étendant en cône, de la forme rentrante (22) et de deuxièmes surfaces d'appui (28 et 29) de l'élément de prise (24).

2. Capote selon la revendication 1, **caractérisée en ce que** les premières surfaces d'appui (26 et 27) et les deuxièmes surfaces d'appui (28 et 29) s'élargissent - vues dans le sens de la hauteur du véhicule (B-B) -de haut en bas.

3. Capote selon la revendication 1 ou 2, **caractérisée en ce que** l'élément de prise (24) est conçu comme un prolongement (30) de la deuxième bielle de toit arrière (18).

4. Capote selon la revendication 3, **caractérisée en ce que** -vu dans le sens de la longueur du véhicule (A-A) - le prolongement (30) de l'élément de prise (24) dépasse de la deuxième bielle de toit (18) d'un léger débord défini (Üst).

5. Capote selon l'une des revendications précédentes, **caractérisée en ce qu'**au moins l'élément de prise (24) est muni d'un revêtement de surface (Obs) sur les deuxièmes surfaces d'appui (28 et 29).

6. Capote selon la revendication 5, **caractérisée en ce que** le revêtement de surface (Obs) est pourvu de propriétés définies de réduction de bruit et de glissement.

7. Capote selon l'une des revendications 5 ou 6, **caractérisée en ce que** le revêtement de surface (Obs) est prévu sur un corps enveloppant (31).

8. Capote selon la revendication 7, **caractérisée en ce que** le corps enveloppant (31) entoure presque complètement un support central (32) du prolongement (30) de la deuxième bielle de toit (18).

9. Capote selon la revendication 8, **caractérisée en ce que** le corps enveloppant (31) est réalisé à la manière d'un patin (33) qui est introduit à partir d'un côté avant (Sv) -vu dans le sens de la marche C - du support central (32).

10. Capote selon l'une des revendications 8 ou 9, **caractérisée en ce que** le support central (32) comporte des surfaces coniques (34 et 35) contre lesquelles s'appuient des premiers tronçons de paroi (36 et 37) du corps enveloppant (31).

11. Capote selon l'une des revendications 8 à 10, **caractérisée en ce que** le support central (32) comporte -vu dans le sens de la hauteur du véhicule (B-B) - une limite inférieure (38) et une limite supérieure (39) contre lesquelles s'appuient des deuxièmes tronçons de paroi (40 et 41) du corps enveloppant (31).

12. Capote selon l'une des revendications 7 à 11, **caractérisée en ce que** le corps enveloppant (31) de l'élément de prise (24) est en plastique, en métal ou en un autre matériau analogue.
